(19) **Europäisches Patentamt / European Patent Office / Office européen des brevets**

(11) **EP 2 630 189 B1**

(12) **EUROPEAN PATENT SPECIFICATION**

(45) Date of publication and mention of the grant of the patent:
**20.07.2016 Bulletin 2016/29**

(51) Int Cl.:
**G02B 1/02** (2006.01)   **G02B 1/00** (2006.01)
**G02B 5/04** (2006.01)   **G02B 5/02** (2006.01)

(21) Application number: **11834638.6**

(22) Date of filing: **20.10.2011**

(86) International application number:
**PCT/KR2011/007833**

(87) International publication number:
**WO 2012/053838 (26.04.2012 Gazette 2012/17)**

(54) **POLYMERIZABLE COMPOSITION AND OPTICAL SHEET COMPRISING CURED RESIN LAYER FORMED THEREFROM**

POLYMERISIERBARE ZUSAMMENSETZUNG UND OPTISCHE FOLIE MIT EINER DARAUS GEFORMTEN AUSGEHÄRTETEN HARZSCHICHT

COMPOSITION POLYMÉRISABLE ET FEUILLE OPTIQUE COMPRENANT UNE COUCHE DE RÉSINE DURCIE FORMÉE SUR CETTE FEUILLE OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.10.2010 KR 20100102296**

(43) Date of publication of application:
**28.08.2013 Bulletin 2013/35**

(73) Proprietor: **Kolon Industries, Inc.**
**Gwacheon-si, Gyeonggi-do 427-709 (KR)**

(72) Inventors:
• **HWANG, Hong Gu**
  **Ganghwa-gun**
  **Incheon 417-883 (KR)**
• **KIM, Kyung Jong**
  **Yongin-si**
  **Gyeonggi-do 446-771 (KR)**
• **PARK, Chang Won**
  **Yongin-si**
  **Gyeonggi-do 446-912 (KR)**
• **SHIN, Eui Young**
  **Seongnam-si**
  **Gyeonggi-do 463-480 (KR)**
• **HONG, Chang Pyo**
  **Yongin-si**
  **Gyeonggi-do 448-170 (KR)**

(74) Representative: **Ter Meer Steinmeister & Partner Patentanwälte mbB**
**Nymphenburger Straße 4**
**80335 München (DE)**

(56) References cited:
JP-A- 2007 308 345    US-A1- 2002 004 544
US-A1- 2003 021 566    US-A1- 2004 115 416
US-A1- 2004 254 282    US-A1- 2006 147 674
US-A1- 2006 147 702

• **DATABASE WPI Week 200933 Thomson Scientific, London, GB; AN 2009-H97879 XP002735061, & JP 2009 098400 A (NIPPON CARBIDE KOGYO KK) 7 May 2009 (2009-05-07)**

Remarks:
The file contains technical information submitted after the application was filed and not included in this specification

**Description**

**Technical Field**

The present invention relates, in general, to
an optical sheet, such as a prism sheet, which has a cured resin layer.

**Background Art**

Generally, in the case of a transparent optical sheet having a prism structure, the rate of increase in luminance varies depending on the refractive index of a resin forming the prism resin. Generally, as the refractive index of the resin forming the prism structure increases, the rate of increase in luminance increases. Thus, research and development has been conducted in order to increase the refractive index of the resin.

Generally, the resin forming the prism structure is made of an organic compound, and the upper limit of the refractive index range controllable by the organic compound is known to be about 1.7, indicating that the range of the refractive index is narrower than that achievable by an inorganic compound. A high-refractive-index resin consisting of only an organic compound has problems, including increased viscosity and low UV stability, which significantly limits the use thereof. Therefore, there is an urgent need for the research and development of a prism composition exhibiting significantly increased luminance.

**Disclosure of Invention**

**Technical Problem**

Accordingly, the present invention has been made keeping in mind the above problems occurring in the prior art, and an object of the present invention is to provide an optical sheet comprising a cured resin layer having a high refractive index.

**Solution to Problem**

In order to accomplish the above objects, according to a first preferred aspect of the present invention, there is provided an optical sheet comprising a cured resin layer, wherein the cured resin layer is formed from a composition containing metal oxide particles represented by the following formula 1:

$$\text{Formula 1}$$

$$R_l Zr_m O_n$$

wherein R comprises a metal selected from the group consisting of Y, Ca, Mg and Ce, and l, m and n are each an integer ranging from 1 to 10,000, wherein a
surface of the cured resin layer has a structured shape in which a plurality of three-dimensional structures are linearly or non-linearly arranged, and wherein the three-dimensional structures are selected from the group consisting of a polyhedral shape that is polygonal, semicircular, or semielliptical in cross section; a columnar shape that is polygonal, semicircular, or semielliptical in cross section; and a curved columnar shape that is polygonal, semicircular, or semielliptical in cross section.

According to a second preferred aspect of the present invention, there is provided a backlight unit assembly comprising at least one layer consisting of said optical sheet.

**Best Mode for Carrying out the Invention**

Hereinafter, the present invention will be described in further detail.

A photopolymerizable composition from which the cured resin layer in the optical sheet according to the present invention is formed comprises metal oxide particles represented by the following formula 1, at least one UV-curable monomer, at least one photoinitiator, and at least one additive.

[Formula 1]

$$R_l Zr_m O_n$$

wherein R comprises a metal selected from the group consisting of Y, Ca, Mg and Ce, and l, m and n are each an integer ranging from 1 to 10,000.

The metal oxide particles may have at least one of a cubic crystalline phase and a tetragonal crystalline phase.

Also, the metal oxide particles may be stabilized zirconia nanoparticles or partially stabilized zirconia (PSZ) nanoparticles which have a particle size of 1 to 300 nm, and preferably 1 to 100 nm.

Stabilized zirconia is also used as grinding media and in engineering ceramics due to its high hardness and high thermal shock resistivity. During a heating process, pure zirconia will undergo a phase transformation process together with a change in the volume thereof. The addition into the zirconia structure to a certain degree of some oxides, such as $Y_2O_3$, CaO, MgO, and $CeO_2$, results in a solid solution, which is in a cubic form and does not undergo phase transformation upon heating.

Partially stabilized zirconia is a mixture of zirconia polymorphs, because insufficient cubic phase-forming oxide (stabilized) has been added and a cubic plus metastable tetragonal $ZrO_2$ mixture is obtained. A smaller addition of stabilizer to the pure zirconia will bring its structure into a tetragonal phase at a temperature higher than 1,000 °C, and a mixture of cubic phase and monoclinic (or tetragonal) phase at a lower temperature.

The photopolymerizable composition comprising the metal oxide particles represented by formula 1 can be cured to provide a cured resin layer having a high refractive index of 1.54 to 2.0. In addition, the composition has excellent heat resistance and abrasion resistance, and thus is suitable for forming a cured resin layer for an optical sheet.

The content of the metal oxide particles represented by formula 1 in the polymerizable composition can be suitably controlled depending on the refractive index or luminance properties required of the cured resin layer, but it is preferably 5-90 wt% based on the total solid content of the photopolymerizable polymer in terms of improving luminance.

The photopolymerizable composition may further comprise, in addition to these metal oxide particles, at least one UV-curable monomer which may advantageously have a refractive index of 1.44 or greater at 25 °C. If the refractive index of the UV-curable monomer is excessively high, it can increase the viscosity of the composition to excessively increase the surface hardness of the cured resin layer, and if the refractive index is excessively low, the refractive index of the resulting optical sheet may be reduced, making it difficult to achieve high luminance.

Specifically, the UV-curable monomer(s) may have a refractive index of 1.44 to 1.60 at 25 °C.

When the composition does not contain or contains a UV-curable monomer having a viscosity of 1 to 50,000 cps at 25 °C and/or a refractive index of 1.44 or higher at 25°C, it can advantageously have a viscosity of 10 to 10,000 cps at 25 °C. Also, the viscosity at 25 °C of the composition can influence not only the processability of the composition, but also the surface hardness of the resulting coated resin layer and the compressive strain of the resulting optical sheet. Thus, if the viscosity of the composition is excessively high, the cured resin layer can become brittle, and if the viscosity of the composition is excessively low, the refractive index of the cured resin layer can be reduced.

Thus, if the composition contains a UV-curable monomer(s) having 1 to 50,000 cps at 25 °C, the content of the monomer is preferably controlled in view of the viscosity of the composition.

In addition, the content of the UV-curable monomer may more preferably be such that the refractive index of the composition is 1.54 or higher, in view of the resulting cured resin layer. Specifically, the content of a UV-curable monomer(s) may be such that the refractive index of the composition is 1.54 to 2.0.

A UV-curable monomer that may be used in the present invention is not specifically is not specifically limited, so long as it satisfies the above-described conditions of refractive index and viscosity. Examples thereof include tetrahydroperfurylacrylate, 2-(2-ethoxyethoxy)ethylacrylate, 1,6-hexanedioldi(meth)acrylate, benzyl(meth)acrylate, phenoxyethyl(meth)acrylate, phenoxypolyethyleneglycol(meth)acrylate, 2-hydroxy-3-phenoxypropylacrylate, neopentylglycolbenzoateacrylate, 2-hydroxy-3-phenoxypropylacrylate, phenylphenoxyethanolacrylate, caprolactone(meth)acrylate, nonylphenolpolyalkyleneglycol(meth)acrylate, butanediol(meth)acrylate, bisphenol A polyalkyleneglycol-di(meth)acrylate, polyalkyleneglycol-di(meth)acrylate, trimethylpropane tri(meth)acrylate, styrene, methylstyrene, phenylepoxy(meth)acrylate, alkyl(meth)acrylate, and bisphenol F ethyleneglycol diacrylate.

From various points of view, the composition comprising the metal oxide particles may advantageously have a refractive index of 1.54 or higher at 25 °C and a viscosity of 1 to 50,000 cps at 25 °C, because it can satisfy the surface hardness of the cured resin layer, the compressive strain of the optical sheet, refractive index and the like.

Specifically, the composition may have a refractive index of 1.54 to 2.0 at 25 °C.

The composition for forming the cured resin layer may comprise, in addition to the metal oxide particles, a photoinitiator for initiating the photopolymerization of the UVcurable monomer(s). Examples of a photoinitiator that may be used in the present invention include phosphine oxide, propanone, ketone, formate, etc.

In addition, the composition may, if necessary, comprise additives, including but not limited to a UV absorber and a UV stabilizer. Also, the composition may further comprise an antistatic agent.

The optical sheet according to the present invention can be advantageous as an optical sheet for improving luminance, if the cured resin layer formed thereon has a refractive index of particularly 1.54 or higher. Specifically, the refractive index at 25 °C of the cured resin layer may be 1.54 to 2.0.

The optical sheet according to the present invention comprises a cured resin layer obtained by curing the photopolymerizable composition. In one embodiment, the optical sheet may comprise the cured resin layer formed on a substrate layer.

The resin forming the substrate layer of the optical sheet according to the present invention is not specifically limited. In view of transparency, the substrate layer may be, but is not limited to, a film made of polyethylene terephthalate, polycarbonate, polypropylene, polyethylene, polystyrene or polyepoxy resin. Preferably, it may be a polyethylene terephthalate film or a polycarbonate film. The thickness of the substrate layer may advantageously be about 10-1,000 um in view of mechanical strength, thermal stability, film flexibility and preventing the loss of transmitted light.

Particularly, the surface of the cured resin layer has a structured layer in which a plurality of three-dimensional structures are linearly or non-linearly arranged.

A method for manufacturing an optical sheet, the surface of which has a structured shape in which a plurality of threedimensional structures are linearly or non-linearly arranged, may comprise the steps of:

preparing a composition comprising metal oxide particles represented by formula 1 and a photoinitiator; applying the composition to a frame having three-dimensional structures engraved thereon; bringing one side of a transparent substrate film into contact with the composition applied to the engraved frame, irradiating the contacted composition with UV light, thereby forming a cured resin layer; and separating the cured resin layer from the engraved frame.

In the step of preparing the composition, at least one UV-curable monomer having a viscosity of 1 to 50,000 cps at 25 °C may be added to control viscosity and refractive index.

In the case of preparing a composition comprising a halogen-free crosslinkable derivative and at least one UV-curable monomer having a viscosity of 1 to 50,000 cps, controlling the refractive index of the composition to 1.54 or higher and the viscosity of the composition to 10 to 10,000 cps is advantageous in terms of not only the compressive strain of the resulting optical sheet, but also the surface hardness.

Meanwhile, the structured shape of the surface of the cured resin layer can vary depending on the shape of the three-dimensional structures engraved on the frame.

Specifically, the structured shape of the surface of the cured resin layer is selected from the group consisting of a polyhedral shape which is polygonal, semicircular or semielliptical in cross section; a columnar shape which is polygonal, semicircular or semielliptical in cross section; or a curved columnar shape which is polygonal, semicircular or semielliptical in cross section. Alternatively, the structured shape may also be a shape comprising one or more of the above shapes. Moreover, examples of the structured shape also include a case having at least one concentrically arranged structure when seen from the top of the cured resin layer while having a structure in which peaks and valleys are formed along the concentric circle.

In addition, an optical sheet according to another embodiment of the present invention may be an optical sheet comprising a substrate layer, a cured resin layer formed from the photopolymerizable composition on one side of the substrate layer, the surface of the cured resin layer having a structured shape, and a light diffusion layer formed on the surface of the cured resin layer. In this case, the need to combine a plurality of optical sheets with each other can be eliminated, and in addition, the luminance of the optical sheet can be improved and the white lines caused by the structured shape of the surface of the optical sheet can be controlled.

## Mode for the Invention

Hereinafter, the present invention will be described in further detail with reference to Examples, but the scope of the present invention is not limited to these Examples.

## Comparative Example 1 and Examples 1 to 5

According to the components and contents shown in Table 1 below, photopolymerizable compositions were prepared. Each of the prepared compositions was applied, according to a conventional method, to a frame engraved with three-dimensional structures (prism layer) having a function of improving luminance. Then, one side of a transparent substrate film (PET film) was brought into contact with the composition applied to the engraved frame, and in this state, the applied composition was photocured by irradiation with UV light. Then, the transparent substrate film having the cured resin layer applied thereto was separated from the transparent substrate film, thereby manufacturing prism films comprising the cured resin layer formed on one side of the transparent substrate film.

The above UV irradiation was carried out by irradiating 900 mJ/cm$^2$ of UV light from an electrodeless UV lamp (600 W/inch; Fusion Corp., USA) equipped with a type-D bulb.

Although the compositions shown in Table below were composed of the organic metal oxides together with the UV-curable monomer and the photoinitiator, it will be obvious to a person skilled in the art that such compositions in Table 1 are only examples presented to confirm the effect of the zirconia compound, synthesized by adding an oxide of at least one of Y, Ca, Mg and Ce, with respect to the refractive index, and may comprise other components and additives.

The compositions of the Examples above were evaluated in the following manner.

(1) Refractive index of composition

The refractive index of the composition according to each of the Examples was measured at 25 °C using a refractometer (Model: 1T, ATAGO ABBE, Japan). A light source used for the measurement of the refractive index was a D-light sodium lamp of 589.3 nm.

(2) Refractive index of cured coating layer formed from composition

In order to measure the refractive index of the compositions after curing, each of the compositions was applied to a PET film, after which a smooth metal plate was placed on the surface of the applied composition and then pressed down such that the thickness of the applied composition reached a thickness of 20 um. Subsequently, using an electrodeless UV lamp (600 W/inch; available from Fusion Corp., USA) equipped with a type-D bulb, 700 mJ/cm2 of UV light was irradiated onto the PET film, followed by removing the metal plate. The refractive index of the PET film having the cured composition formed thereon was measured at 25 °C using a refractometer (model: 1T, ATAGO ABBE, Japan). The light source used for the measurement of the refractive index was a D-light sodium lamp of 589.3 nm.

Table 1

[Table ]

| | | Comp. Ex. | Ex. 1 | Ex. 2 | Ex. 3 | Ex. 4 | Ex. 5 |
|---|---|---|---|---|---|---|---|
| Metal oxide particles | Compound of formula 1 | - | R=Y1= 4m = 21n = 48 | R= Mg1 = 1m = 1n = 3 | R = Cal = 1m = 1n = 3 | R = Cal 4n =9 | R = Cal = 1m = 4n =9 |
| | Content (wt%) | - | 20 | 20 | 20 | 20 | 30 |
| UV-cura ble monomer | Bifunction al acrylate | R712 (bisphenol F ethyleneglycol diacrylate; Nippon Kayaku Co., Ltd) | | | | | |
| | Content (wt%) | 99.5 | 79.5 | 79.5 | 79.5 | 79.5 | 69.5 |
| Photoinitiator (wt%) | | 0.5 | 0.5 | 0.5 | 0.5 | 0.5 | 0.5 |
| Refractive index of composition (25°C) | | 1.540 | 1.665 | 1.664 | 1.658 | 1.670 | 1.696 |
| Refractive index of cured coating layer (25°C) | | 1.561 | 1.676 | 1.674 | 1.670 | 1.683 | 1.710 |

As can be seen in Table 1 above, the results of measuring the refractive indices of the composition and the cured coating layer for Examples 1 to 5 and Comparative Example 1 revealed that the photopolymerizable compositions comprising the metal oxide particles represented by formula 1 can provide prism sheets having the desired refractive index.

**Claims**

1. An optical sheet comprising a cured resin layer, wherein the cured resin layer is formed from a composition containing metal oxide particles of the following formula 1:

Formula 1

$$R_lZr_mO_n$$

wherein R comprises a metal selected from the group consisting of Y, Ca, Mg and Ce, and 1, m and n are each an integer ranging from 1 to 10,000,

wherein a surface of the cured resin layer has a structured shape in which a plurality of three-dimensional structures are linearly or non-linearly arranged, and wherein the three-dimensional structures are selected from the group consisting of a polyhedral shape that is polygonal, semicircular, or semielliptical in cross section; a columnar shape that is polygonal, semicircular, or semielliptical in cross section; and a curved columnar shape that is polygonal, semicircular, or semielliptical in cross section.

2. The optical sheet of claim 1, which further comprises a substrate layer, and the cured resin layer is formed on one side of the substrate layer.

3. The optical sheet of claim 1, which comprises a light diffusion layer formed on the surface thereof.

4. The optical sheet of claim 1, wherein the cured resin layer has a refractive index of 1.54 to 2.0.

5. A backlight unit assembly comprising at least one layer consisting of the optical sheet of claim 1 to 3.

**Patentansprüche**

1. Optische Folie, umfassend eine gehärtete Harzschicht, worin die gehärtete Harzschicht gebildet ist aus einer Zusammensetzung, enthaltend Metalloxidteilchen der folgenden Formel 1:

Formel 1

$$R_lZr_mO_n$$

worin R ein Metall umfasst, ausgewählt aus der Gruppe, bestehend aus Y, Ca, Mg und Ce, und $l$, $m$ und $n$ jeweils eine ganze Zahl im Bereich von 1 bis 10000 sind,

worin eine Oberfläche der gehärteten Harzschicht eine strukturierte Form aufweist, in der eine Vielzahl von dreidimensionalen Strukturen linear oder nicht-linear angeordnet sind, und worin die dreidimensionalen Strukturen ausgewählt sind aus der Gruppe, bestehend aus einer polyedrischen Form, die im Querschnitt polygonal, halbkreisförmig oder semielliptisch ist; einer säulenartigen Form, die polygonal, halbkreisförmig oder semielliptisch im Querschnitt ist; und einer gekrümmten säulenartigen Form, die polygonal, halbkreisförmig oder semielliptisch im Querschnitt ist.

2. Optische Folie nach Anspruch 1, welche weiterhin eine Substratschicht umfasst und worin die gehärtete Harzschicht auf einer Seite der Substratschicht ausgebildet ist.

3. Optische Folie nach Anspruch 1, welche eine lichtstreuende Schicht, die auf der Oberfläche ausgebildet ist, umfasst.

4. Optische Folie nach Anspruch 1, worin die gehärtete Harzschicht einen Beugungsindex von 1,54 bis 2,0 aufweist.

5. Hintergrundbeleuchtungseinheitsbauteil, umfassend mindestens eine Schicht, die aus der optischen Folie nach Anspruch 1 bis 3 besteht.

**Revendications**

1. Feuille optique comprenant une couche de résine durcie, dans laquelle la couche de résine durcie est formée à partir d'une composition contenant des particules d'oxydes métalliques de la formule 1 suivante :

formule 1

$$R_lZr_mO_m$$

dans laquelle R comprend un métal choisi parmi le groupe constitué par le Y, le Ca, le Mg et le Ce, et *l*, *m* et *n* sont chacun un nombre entier allant de 1 à 10.000,

dans laquelle la surface de la couche de résine durcie à une forme structurée dans laquelle une pluralité de structures tridimensionnelles sont arranges de manière linéaire et non linéaire, et dans laquelle les structures tridimensionnelles sont choisies parmi le groupe constitué par une forme polyédrique qui est polygonale, semi-circulaire, ou semi-elliptique en coupe transversale ; une forme colonnaire qui est polygonale, semi-circulaire, ou semi-elliptique en coupe transversale ; et une forme colonnaire courbée qui est polygonale, semi-circulaire, ou semi-elliptique en coupe transversale.

2. La feuille optique selon la revendication 1, qui comprend en plus une couche de substrat, et une couche de résine durcie qui est formée sur un côté de la couche de substrat.

3. La feuille optique selon la revendication 1, qui comprend une couche de diffusion de lumière formée sur la surface de celle-ci.

4. La feuille optique selon la revendication, dans laquelle la couche de résine durcie a un indice de réfraction de 1,54 à 2,0.

5. Ensemble d'unité de rétro-éclairage comprenant au moins une couche constituée de la feuille optique selon l'une quelconque des revendications 1 à 3.